# EUROPÄISCHE PATENTSCHRIFT

(11) **EP 0 863 174 B1**
(45) Veröffentlichungstag und Bekanntmachung des Hinweises auf die Patenterteilung: **06.10.2004**
(21) Anmeldenummer: 98100441.9
(22) Anmeldetag: 13.01.1998
(51) Int. Cl.: C08J 3/14, C09D 177/00

(54) **Herstellung von Polyamid-Fällpulvern mit enger Korngrössenverteilung und niedriger Porosität**
Preparation of precipitated polyamide powders with a narrow grain size distribution and low porosity
Préparation de poudres précipitées de polyamides à répartition granulométrique étroite et basse porosité

(30) Priorität: 05.03.1997 DE 19708946
(43) Veröffentlichungstag der Anmeldung: 09.09.1998
(73) Patentinhaber: Degussa AG, 40474 Düsseldorf (DE)
(72) Erfinder: Baumann, Franz-Erich, Dr., 48249 Dülmen (DE); Wilczok, Norbert, 45481 Mülheim (DE)

(56) Entgegenhaltungen:
- DE-A- 3 510 690
- DE-A- 4 421 454

## Beschreibung

Gegenstand der Erfindung ist ein Verfahren zur Herstellung von Polyamid-Fällpulvern mit recht einheitlicher Korngröße und niedriger Porosität.

Beschichtungspulver auf Polyamid-Basis zeichnen sich durch ihre hohe Chemikalienbeständigkeit sowie sehr gute mechanische Eigenschaften aus Dabei sind Pulver, die durch Umfallen aus ethanolischer Lösung erhalten werden, z. B nach DE-OS 29 06 647, hinsichtlich ihres Verarbeitungsverhaltens solchen Produkten uberlegen, die aus einem Mahlprozeß, z B. nach DE-OS 15 70 392, erhalten werden, da die Fallung zu runderen und damit besser fluidisierbaren Partikeln fuhrt Außerdem besitzen Mahlpulver, wie man sie z B nach DE-PS 28 55 920 erhalt, eine breite Korngrößenverteilung, die einen hohen Klassieraufwand bedingt. Ein weiterer Vorteil der Fällpulver besteht in der großen Variationsbreite des Molekulargewichts (ηᵣₑₗ = 1,5 bis 2,0), wahrend Mahlpulver nur bei einem ηᵣₑₗ < 1,7 wirtschaftlich herstellbar sind

Das Fallverfahren in seiner bekannten Form aus alkoholischen Lösungen unter Druck stößt an seine technischen Grenzen, wenn danach kompakte Pulver mit einer niedrigen Porosität, ausgedruckt durch ihre BET-Oberflachen, hergestellt werden sollen. Dies gilt vor allem für Feinpulver mit einem Kornanteil < 100 µm uber 90 %, vor allem, wenn der für das Stauben verantwortliche Anteil d < 32 µm mittels Siebung und Sichtung nur schwer abgetrennt werden kann: Dieser Anteil ist bei gröberem Fällpulver weniger ausgeprägt Wenn Pulver mit einer Kornobergrenze von 63 µm, z. T. auch von < 40 µm, benotigt werden, mussen diese in einem oder mehreren Klassierschritten aus dem gefällten und getrockneten Rohpulver abgetrennt werden Der im Rohpulver vorhandene Feinanteil < 32 µm begrenzt bei Feinpulvern die Ausbeute an Nutzkorn Zwar ist es nach DE-OS 35 10 689 möglich, durch Anwendung niedriger Lösetemperaturen zu feinen Pulvern mit recht einheitlicher Korngroße zu gelangen, diese Produkte sind normalerweise durch niedrige Schuttdichten und hohe BET-Oberflachen gekennzeichnet und deshalb schlechter fließend. Außerdem sollten die Pulver eine niedrige Porosität besitzen, ermittelt durch ihre BET-Oberfläche. Gemäß der DE-OS 44 21 454 können Polyamid-Fällpulver mit engen Korngrößenverteilungen und niedriger Porosität hergestellt werden Mit diesem Verfahren werden jedoch sehr feine Polyamid- Pulver durch einen nachträglichen Mahlprozeß erhalten. Gröbere Pulver, wie sie für die Wirbelsinterbeschichtung eingesetzt werden, sollen einen hohen Anteil zwischen 60 und 150 µm enthalten, in diesen Fällen muß neben dem Staubanteil auch Grobkorn > 250 µm durch Siebung abgetrennt werden.

Es besteht daher Bedarf an einem modifizierten Fallverfahren, das kompakte Pulver mit engerer Kornverteilung liefert, damit vorzugsweise eine Klassierung unnötig wird oder zumindest eine erhöhte Ausbeute bei der Klassierung durch Siebung bzw. Sichtungen erzielt werden kann Außerdem sollten die Pulver eine niedrige Porosität besitzen, ermittelt durch ihre BET-Oberflächen.

Uberraschenderweise wurde die Aufgabe gemäß der Patentansprüche gelost.

Das erfindungsgemaße Verfahren erlaubt die Umfallung eines Homopolyamides oder eines einheitlich zusammengesetzten Copolyamids aus ethanolischer Losung unter Druck zu kompaktem Pulver, dessen Schüttdichte bei vergleichbarer Korngrößenverteilung die Werte der Produkte gemäß DE-OS 35 10 689 ubertrifft. Die aus DE-OS 35 10 690 bekannten Lösetemperaturen für das Polyamid von 135 bis 165 °C, vorzugsweise 140 bis 155 °C, Abkühlraten von 10 K/h, vorzugsweise 105 bis 125 °C werden ebenfalls eingestellt; im konkreten Einzelfall können die für das jeweilige Polyamid und die im Hinblick auf eine hohe Raum-Zeit-Ausbeute anzustrebenden Konzentrationen wünschenswerten Polyamidkonzentrationen von ≥ 10 %, bevorzugt ≥ 15 %, erforderlichen Losetemperaturen durch Vorversuche ermittelt werden. Überraschend wurde jedoch gefunden, daß Polyamidpulver mit engerer Kornverteilung ausfallen, wenn der eigentlichen Fällung eine 10 bis 120 Minuten, vorzugsweise 30 bis 90 Minuten dauernde Keimbildungsphase vorangeschaltet wird, in der die PA-Lösung optisch klar bleibt und keine exotherme Kristallisation beobachtet wird Hierzu wird die alkoholische Losung 2 K bis 20 K, vorzugsweise 5 K bis 15 K über der späteren Fälltemperatur isotherm über die vorgenannte Zeit hinweg gerührt und die Temperatur mit den obigen Kühlraten dann auf die möglichst konstant zu haltende Fälltemperatur abgesenkt. Im Hinblick auf die angestrebte mittlere Korngröße sind gemäß DE-OS 35 10 691 hohe Ruhrerdrehzahlen vorteilhaft, wenn geringe mittlere Korngrößen erhalten werden sollen. Geeignete Rührkessel sind dem Fachmann bekannt. Vorzugsweise werden Blattrührer eingesetzt.

Für die Umfällung können prinzipiell alle teilkristallinen Polyamide eingesetzt werden, besonders geeignete Polyamide sind z. B die Polymerisate von Lactamen mit einer C-Atomzahl ≥ 10 bzw. die Polykondensate der entsprechenden ω-Aminocarbonsauren sowie die Polykondensate aus aliphatischen Diaminen und Dicarbonsauren mit jeweils ≥ 10 C-Atomen und Copolyamide aus den vorgenannten Monomeren. Bevorzugt wird hydrolytisch polymerisiertes PA 12 eingesetzt.

Ungeregelte Polyamide eignen sich ebenso wie geregelte Polyamide; ihre relative Losungsviskositat, gemessen in 0,5%iger m-Kresollosung nach DIN 53 727 betragt 1,4 bis 2,0, bevorzugt 1,5 bis 1,8.

Gegenstand der Erfindung ist ein Verfahren zur Herstellung von Polyamid-Beschichtungspulvern, dadurch gekennzeichnet, daß ein Polyamid aus Lactamen bzw. ω-Aminocarbonsäuren mit mindestens 10 C-Atomen bzw Diaminen und Dicarbonsäuren mit jeweils mindestens 10 C-Atomen oder Copolyamide aus den genannten Monomeren umgefällt wird, indem das Polyamid in einem aliphatischen Alkohol mit 1 bis 3 C-Atomen unter Druck gelöst, die Temperatur bis zu einer Keimbildung ohne auszufallen erniedrigt, anschließend die Temperatur in einer zweiten Stufe bis zur Übersättigung weiter erniedrigt und nach der Fällung die Suspension getrocknet wird

Das Polyamid wird im Alkohol, vorzugsweise Ethanol, bei 130 bis 165 °C, vorzugsweise bei 135 bis 155 °C, gelöst. Die Fällung wird dann isotherm bei 100 bis 130 °C durchgeführt, wobei zuvor eine Keimbildungsstufe 2 bis 20 °C, vorzugsweise 5 bis 15 °C, über der Fälltemperatur gehalten wird In der Keimbildungsphase wird die Temperatur während 10 Minuten bis 2 Stunden, vorzugsweise 30 bis 90 Minuten, konstant gehalten. Als Polyamid eignet sich besonders Polylaurinlactam.

Nach dem erfindungsgemäßen Verfahren lassen sich Polyamid-Fallpulver herstellen, die eine Kornobergrenze von 100 µm, mit mindestens 90 % Anteil unter 90 µm, maximal 10 % unter 32 µm und eine Schuttdichte über 400 g/l bzw eine BET-Oberflache unter 10 m²/g besitzen

Mit dem erfindungsgemaßen Verfahren konnen gewunschte Komgroßenverteilungen eingestellt werden Tiefere Fälltemperaturen führen zu gröberem Korn und niedrigen BET-Oberflächen. Für die Keimbildungstemperatur gilt: abnehmende Werte führen zu niedrigeren BET-Oberflächen sowie niedrigeren Grobanteilen (D 0,9).

Die Breite der Kornverteilung wird in nichtlinearer Weise beeinflußt: Unterhalb eines für jeden Stoff spezifischen Grenzwertes nehmen die Differenzen D 0,9 - D 0,1 ab, um nach Durchlaufen eines Optimums wieder breiter zu werden. Zusammen mit der Ruhrerdrehzahl verfugt man über 3 Freiheitsgrade, um den mittleren Korndurchmesser, Breite und BET-Oberfläche einzustellen.

Nach dem erfindungsgemaßen Verfahren ist die bevorzugte Korngroßenverteilung der Polyamid-Pulver D 0,9 - D 0,1 < 60 µm, besonders bevorzugt < 50 µm.

Ohne Keimbildungsphase liegen die Differenzen D 0,9 - D 0,1 uber 65 µm - 70 µm bei PA 12

Die so hergestellten Polyamid-Pulver können als Zusatz zu Coil-Coating Lacken eingesetzt werden Die Polyamid-Pulver der beschriebenen Art können zur Metallbeschichtung nach dem elektrostatischen Sprühverfahren oder nach dem Wirbelsinterverfahren verwendet werden.

Dem Fachmann bekannte Additive (vgl. DE-OSS 35 10 689, 35 10 690, 35 10 691), wie Stabilisatoren, Nachkondensationskatalysatoren oder Pigmente, können bereits wahrend der Lösestufe, vor der Keimbildungsphase oder auch nach der Fällung zur Suspension gegeben werden. Wahrend der Keimbildungs- und Fallungsphase sollten keine Additive zudosiert werden, da sonst die isotherme Temperaturführung in beiden Stufen nicht gewahrleistet ist. Thermische Inhomogenitäten im Reaktor sollten in diesen beiden Phasen soweit möglich vermieden werden, da damit eine breitere Kornverteilung und die Gefahr vorzeitiger Fällung bei hoher Temperatur, die dann zu sehr voluminösern Pulver mit sehr hohen BET-Oberflächen (über 15 bis 20 m²/g) fuhrt, verbunden ist.

Die Trocknung der Ethanolsuspension wird nach den z. B. in DE-OS 35 10 689 oder DE-OS 35 10 690 beschriebenen Verfahren durchgeführt.

Die Klassierung der Rohpulver erfolgt mittels Sieben sowie in Zentrifugalrad-Windsichtern.

Die nachfolgenden Beispiele sollen die Erfindung erläutern, ohne sie in irgendeiner Weise einzuschranken. Die Korngrößenverteilungen werden durch Siebung sowie Lichtstreuung im Laserstrahl (Malvern Mastersizer S / 0 - 900 µm) ermittelt Die innere Oberflache wird nach Brunauer-Emmet-Teller (BET) bestimmt durch Adsorption von Stickstoff.

Es bedeuten
- D_{0.1} in µm.: Integrale Kornverteilung nach Laserbeugung, bei der 10 % unter dem genannten Durchmesser liegen
- D_{0.5} in µm:: dto , bei der 50 % unter dem angegebenen Durchmesser liegen
- D_{0.9} in µm.: dto , bei der 90 % unter dem genannten Durchmesser liegen
- Mittelwert:: Erhalten aus der Volumenverteilung nach Laserbeugung
- Breite:: Differenz der D_{0.9}- und D_{0.1}-Durchgange der integralen Verteilungsfunktion

### Beispiele

### Beispiel 1: Einstufige Umfällung von ungeregeltem PA 12 gemaß DE-OS 35 10 690 (nicht erfindungsgemäß)

400 kg ungeregeltes, durch hydrolytische Polymerisation hergestelltes PA 12 mit einer relativen Losungsviskosität von 1,62 und einem Endgruppengehalt von 75 mmol/kg COOH bzw. 69 mmol/kg NH₂ werden mit 2.500 l Ethanol, vergällt mit 2-Butanon und 1 % Wassergehalt, innerhalb von 5 Stunden in einem 3 m³-Rührkessel (d = 160 cm) auf 145 °C gebracht und unter Rühren (Blattrührer, d = 80 cm, Drehzahl = 85 Upm) 1 Stunde bei dieser Temperatur belassen Anschließend wird die Manteltemperatur auf 124 °C reduziert und unter kontinuierlichem Abdestillieren des Ethanols mit einer Kuhlrate von 25 K/h bei derselben Ruhrerdrehzahl die Innentemperatur auf 125 °C gebracht. Von jetzt an wird bei gleicher Kühlrate die Manteltemperatur 2 K bis 3 K unter der Innentemperatur gehalten, bis bei 109 °C die Fällung, erkennbar an der Wärmeentwicklung, einsetzt. Die Destillationsgeschwindigkeit wird soweit erhöht, daß die Innentemperatur nicht über 109,3 °C ansteigt Nach 20 Minuten fällt die Innentemperatur ab, was das Ende der Fällung anzeigt. Durch weiteres Abdestillieren und Kühlung über den Mantel wird die Temperatur der Suspension auf 45 °C gebracht und die Suspension danach in einen Schaufeltrockner überführt. Das Ethanol wird bei 70 °C/500 mbar abdestilliert, und der Rückstand anschließend bei 20 mbar/86 °C 3 Stunden nachgetrocknet

| | | | | |
|---|---|---|---|---|
| Siebanalyse | < 32 µm | 8 Gew.-% | Laserbeugung < 30,5 µm: | 6,8 % |
| | < 40 µm | 17 Gew.-% | | |
| | < 50 µm | 26 Gew.-% | Mittelwert D 0,5: | 61 µm |
| | < 63 µm | 55 Gew.-% | | |
| | < 80 µm | 92 Gew.-% | Breite D (0,9 - 0,1): | 87 µm |
| | <100 µm | 100 Gew.-% | (0,9 - 0,1) | |

### Schuttdichte. 433 g/l

### Beispiel 2: Einstufige Umfallung von geregeltem PA 12 gemaß DE-OS 44 21 454 (nicht erfindungsgemäß)

Man wiederholt Beispiel 1 mit einem PA 12-Granulat, das durch hydrolytische LL-Polymerisation in Gegenwart von 1 Tl. Dodecandisäure/100 Tl. LL erhalten worden ist. ηᵣₑₗ = 1,60, [COOH] = 132 mmol/kg, [NH₂] = 5 mmol/kg.

Mit Ausnahme der Rührerdrehzahl (100 Upm) entsprechen die Lose-, Fall- und Trocknungsbedingungen dem Beispiel 1.

### Schuttdichte: 425 g/l

| | | |
|---|---|---|
| Siebanalyse | < 32 µm | 8 Gew.-% |
| | < 40 µm | 27 Gew.-% |
| | < 50 µm | 61 Gew.-% |
| | < 63 µm | 97 Gew.-% |
| | < 90 µm | 100 Gew.-% |

Dieses Pulver wird durch Sieben und Sichten in folgende Fraktionen klassiert

| | | |
|---|---|---|
| Sichtergrobgut | < 32 µm | 2 Gew.-% |
| | < 45 µm | 10 Gew.-% |
| | < 63 µm | 20 Gew.-% |
| | < 80 µm | 80 Gew.-% |
| | < 90 µm | 100 Gew.-% |

| | | |
|---|---|---|
| Sichterfeingut | < 32 µm | 45 Gew -% |
| | < 40 µm | 75 Gew -% |
| | < 63 µm | 92 Gew.-% |
| | < 80 µm | 96 Gew.-% |
| | < 90 µm | 100 Gew.-% |

### Beispiele 3 und 4: (nicht erfindungsgemäß)

Man wiederholt Beispiel 2 mit dem gleichen geregelten PA 12-Muster mit folgenden Verfahrensparametern

| Beispiel | Drehzahl d. R. Upm | Lösetemperatur °C | Fälltemperatur °C | Schüttdichte g/l | BET m²/g | Kornverteilung D 0,1/0,5/0,9 |
|---|---|---|---|---|---|---|
| 3 | 85 | 140 | 113 | 450 | 6,35 | 29/64/101 |
| 4 | 85 | 140 | 112 | 454 | 4,46 | 34/65/99 |

### Beispiel 5: Einstufige Umfällung von PA 1010 (nicht erfindungsgemäß)

Man fällt entsprechend Beispiel 1 400 kg eines durch Polykondensation von 1,10-Decandiamin und Sebacinsaure erhaltenen PA 1010-Musters mit folgenden Kenndaten um ηᵣₑₗ = 1,84, [COOH] = 62 mmol/kg, [NH₂] = 55 mmol/kg

Die Fallbedingungen werden gegenuber Beispiel 1 folgendermaßen abgeandert

Falltemperatur. 120 °C, Fällungszeit 2 Stunden, Ruhrerdrehzahl: 90 Upm

### Schuttdichte 417 g/l

| | | |
|---|---|---|
| Siebanalyse | < 32 µm | 6,0 Gew.-% |
| | < 45 µm | 8,5 Gew.-% |
| | < 63 µm | 23,5 Gew.-% |
| | < 100 µm | 96,1 Gew.-% |
| | < 160 µm | 99,7 Gew.-% |
| | < 200 µm | 99,9 Gew.-% |
| | < 250 µm | 100,0 Gew.-% |

### Beispiel 6: Einstufige Umfallung von PA 1012 (nicht erfindungsgemäß)

Man fallt entsprechend Beispiel 1 400 kg eines durch Polykondensation von 1,10-Decandiamin und Dodecandisäure erhaltenen PA 1012-Granulatmusters mit folgenden Daten um: ηᵣₑₗ = 1,76, [COOH] = 46 mmol/kg, [NH₂] = 65 mmol/kg

Fällbedingungen werden gegenüber Beispiel 1 folgendermaßen abgeändert:
Losetemperatur: 155 °C, Fälltemperatur: 123 °C, Fallungszeit: 40 Minuten,
Rührerdrehzahl: 110 Upm

### Schüttdichte: 510 g/l

| | | |
|---|---|---|
| Siebanalyse | < 32 µm | 0,2 Gew.-% |
| | < 100 µm | 44,0 Gew.-% |
| | < 250 µm | 99,8 Gew.-% |

### Beispiel 7: Einstufige Umfallune von PA 1012 (nicht erfindungsgemäß)

Man wiederholt Beispiel 6 mit folgenden Änderungen:

Falltemperatur: 125 °C, Fallungszeit: 60 Minuten

### Schüttdichte: 480 g/l

| | | |
|---|---|---|
| Siebanalyse | < 32 µm | 0,1 Gew.-% |
| | < 100 µm | 72,8 Gew.-% |
| | < 250 µm | 99,7 Gew.-% |

### Beispiel 8: Einstufige Umfallung von PA 1012 (nicht erfindungsgemäß)

Man wiederholt Beispiel 4 mit folgenden Anderungen:
Fälltemperatur: 128 °C, Fällungszeit: 90 Minuten
Schuttdichte: 320 g/l

| | | |
|---|---|---|
| Siebanalyse | < 32 µm | 0,5 Gew.-% |
| | < 100 µm | 98,5 Gew.-% |
| | < 250 µm | 99,6 Gew.-% |

### Beispiel 9: Einstufige Umfällung von PA 1212 (nicht erfindungsgemaß)

Man fallt entsprechend Beispiel 1 400 kg eines durch Polykondensation von 1,10-Decandiamin und Dodecandisaure erhaltenen PA 1212-Granulatmusters mit folgenden Daten um: ηᵣₑₗ = 1,80, [COOH] = 3 mmol/kg, [NH₂] = 107 mmol/kg

Fällbedingungen werden gegenüber Beispiel 1 folgendermaßen abgeandert.
Losetemperatur: 155 °C, Falltemperatur: 117 °C, Fällungszeit 60 Minuten,
Rührerdrehzahl: 110 Upm

### Schuttdichte: 450 g/l

| | | |
|---|---|---|
| Siebanalyse | < 32 µm | 0,5 Gew.-% |
| | < 100 µm | 54,0 Gew.-% |
| | < 250 µm | 99,7 Gew.-% |

### Beispiel 10: Zweistufige Umfallung von ungeregeltem PA 12 (erfindungsgemäß)

400 kg ungeregeltes, durch hydrolytische Polymerisation hergestelltes PA 12 mit einer relativen Lösungsviskositat von 1,62 und einem Endgruppengehalt von 75 mmol/kg COOH bzw. 69 mmol/kg NH₂ werden mit 2 500 l Ethanol, vergällt mit 2-Butanon und 1 % Wassergehalt, innerhalb von 5 Stunden in einem 3 m³-Rührkessel (a = 160 cm) auf 145 °C gebracht und unter Rühren (Blattrührer, a = 80 cm, Drehzahl = 49 Upm) 1 Stunde bei dieser Temperatur belassen. Anschließend wird die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wird bei gleicher Kuhlrate die Manteltemperatur 1 K bis 3 K unter der Innentemperatur gehalten. Die Innentemperatur wird mit gleicher Kuhlrate auf 117 °C gebracht und dann 60 Minuten konstant gehalten Danach wird weiter bei einer Kühlrate von 40 K/h abdestilliert und so die Innentemperatur auf 111 °C gebracht Bei dieser Temperatur setzt die Fällung ein, erkennbar an der Wärmeentwicklung. Die Destillationsgeschwindigkeit wird soweit erhöht, daß die Innentemperatur nicht über 111,3 °C ansteigt. Nach 25 Minuten fallt die Innentemperatur ab, was das Ende der Fällung anzeigt Durch weiteres Abdestillieren und Kühlung über den Mantel wird die Temperatur der Suspension auf 45 °C gebracht und die Suspension danach in einen Schaufeltrockner uberführt Das Ethanol wird bei 70 °C/ 400 bar abdestilliert und der Ruckstand anschließend bei 20 mbar/86 °C 3 Stunden nachgetrocknet

Die Pulvereigenschaften gehen aus Tabelle 1 hervor

### Beispiele 11 bis 13: Zweistufige Umfallung von geregeltem PA 12

Beispiel 10 wird mit den in Tab. 1 angegebenen Ruhrerdrehzahlen wiederholt

Beispiele 10 bis 13 illustrieren die bei vergleichbarem Kornspektrum erzielbaren hoheren Schüttdichten.

### Beispiele 14 bis 27: Zweistufige Umfallung von geregeltem PA 12

Man wiederholt Beispiel 10 mit einem PA 12-Granulat, das durch hydrolytische LL-Polymerisation in Gegenwart von 1 Tl. Dodecandisaure/100 Tl LL erhalten worden ist: ηᵣₑₗ = 1,61, [COOH] = 138 mmol/kg, [NH₂] = 7 mmol/kg

Rührerdrehzahl, Löse-, Keimbildungs- und Fälltemperaturen gehen aus Tab. 2 hervor, dazu so die Pulvereigenschaften. Diese Beispiele sind mit Beispiel 2 bis 4 zu vergleichen und illustrieren den kompakteren Korncharakter - erkennbar an höherer Schüttdichte und in der Regel niedrigerer BET-Oberfläche - bei gleichzeitig engerer Kornverteilung Die Beispiele 14 und 15 illustrieren den Gang des Kornspektrums zu groberen Partikeln mit sehr kleiner BET-Oberflache bei tieferen Falltemperaturen. Beispiele 16 bis 27 verdeutlichen, daß die mittlere Krongroße sowie die Kornobergrenze bei gleichen Fälltemperaturen abfallen, wenn die Keimbildungsphase vorgeschaltet wird.

### Beispiel 28: Zweistufige Umfällung von PA 1010

Man fallt entsprechend Beispiel 10 400 kg eines durch Polykondensation von 1,10-Decandiamin und Sebacinsäure erhaltenen PA 1010-Musters mit folgenden Daten um ηᵣₑₗ = 1,84, [COOH] = 62 mmol/kg, [NH₂] = 55 mmol/kg

Die Fallbedingungen werden gegenüber Beispiel 10 folgendermaßen abgeandert:
Losetemperatur 155°C, Keimbildungstemperatur/Zeit: 128 °C/60 min
Falltemperatur: 120°C, Fallungszeit 1 Stunde, Ruhrerdrehzahl: 90 Upm

### Schüttdichte 440 g/l

| | | |
|---|---|---|
| Siebanalyse | < 32 µm | 4,2 Gew.-% |
| | < 63 µm | 28,6 Gew.-% |
| | < 100 µm | 86,1 Gew.-% |
| | < 160 µm | 99,7 Gew.-% |
| | < 250 µm | 100,0 Gew.-% |

### Beispiel 29: Zweistufige Umfallung von PA 1012

Man fallt entsprechend Beispiel 10 400 kg eines durch Polykondensation von 1,10-Decandiamin und Dodecandisaure erhaltenen PA 1012-Granulatmusters mit folgenden Daten um: ηᵣₑₗ = 1,76, [COOH] = 46 mmol/kg, [NH₂] = 65 mmol/kg (wie in Beispiel 4)

Die Fällbedingungen werden gegenüber Beispiel 10 folgendermaßen abgeändert.
Lösetemperatur: 155 °C, Keimbildungstemperatur: 141 °C, Fälltemperatur: 123 °C,
Fallungszeit: 40 Minuten. Rührerdrehzahl: 110 Upm

### Schuttdichte: 530 g/l

| | | |
|---|---|---|
| Siebanalyse | < 32 µm | 1,3 Gew.-% |
| | < 100 µm | 34,1 Gew.-% |
| | < 250 µm | 99,7 Gew.-% |

### Beispiel 30: Zweistufige Umfällung von PA 1012

Man wiederholt Beispiel 29 mit folgenden Änderungen:
Keimbildungszeit: 90 Minuten

### Schüttdichte: 530 g/l

| | | |
|---|---|---|
| Siebanalyse | < 32 µm | 0,8 Gew.-% |
| | < 100 µm | 32,2 Gew.-% |
| | < 250 µm | 99,8 Gew.-% |

### Beispiel 31: Zweistufige Umfällung von PA 1012

Man wiederholt Beispiel 29 mit folgenden Änderungen:
Keimbildungszeit 120 Minuten

### Schüttdichte 530 g/l

| | | |
|---|---|---|
| Siebanalyse | < 32 µm | 0,3 Gew.-% |
| | < 100 µm | 28,4 Gew.-% |
| | < 250 µm | 99,8 Gew.-% |

### Beispiel 32: Zweistufige Umfällung von PA 1212

Man fällt entsprechend Beispiel 10 400 kg eines durch Polykondensation von 1,10-Decandiamin und Dodecandisaure erhaltenen PA 1212-Granulatmusters mit folgenden Daten um: ηᵣₑₗ = 1,80, [COOH] = 3 mmol/kg, [NH₂] = 107 mmol/kg.

Die Fällbedingungen werden gegenüber Beispiel 1 folgendermaßen abgeändert:
Losetemperatur: 155 °C, Keimbildungstemperatur: 123 °C, Keimbildungszeit: 60 min
Falltemperatur: 117 °C, Fällungszeit: 60 Minuten, Rührerdrehzahl 110 Upm

### Schüttdichte: 480 g/l

| | | |
|---|---|---|
| Siebanalyse | < 32µm | 1,3 Gew.-% |
| | < 100 µm | 56,6 Gew.-% |
| | < 250 µm | 99,8 Gew.-% |

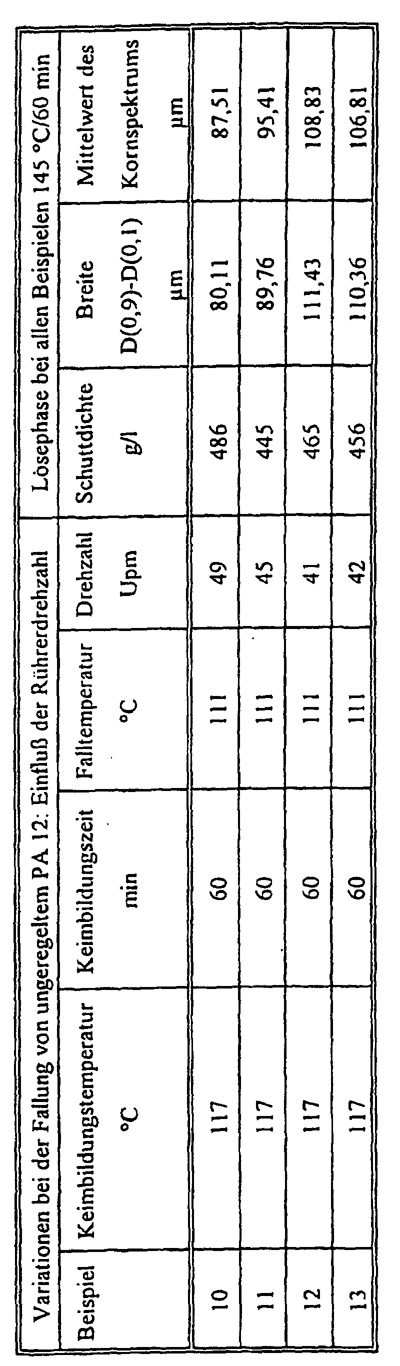

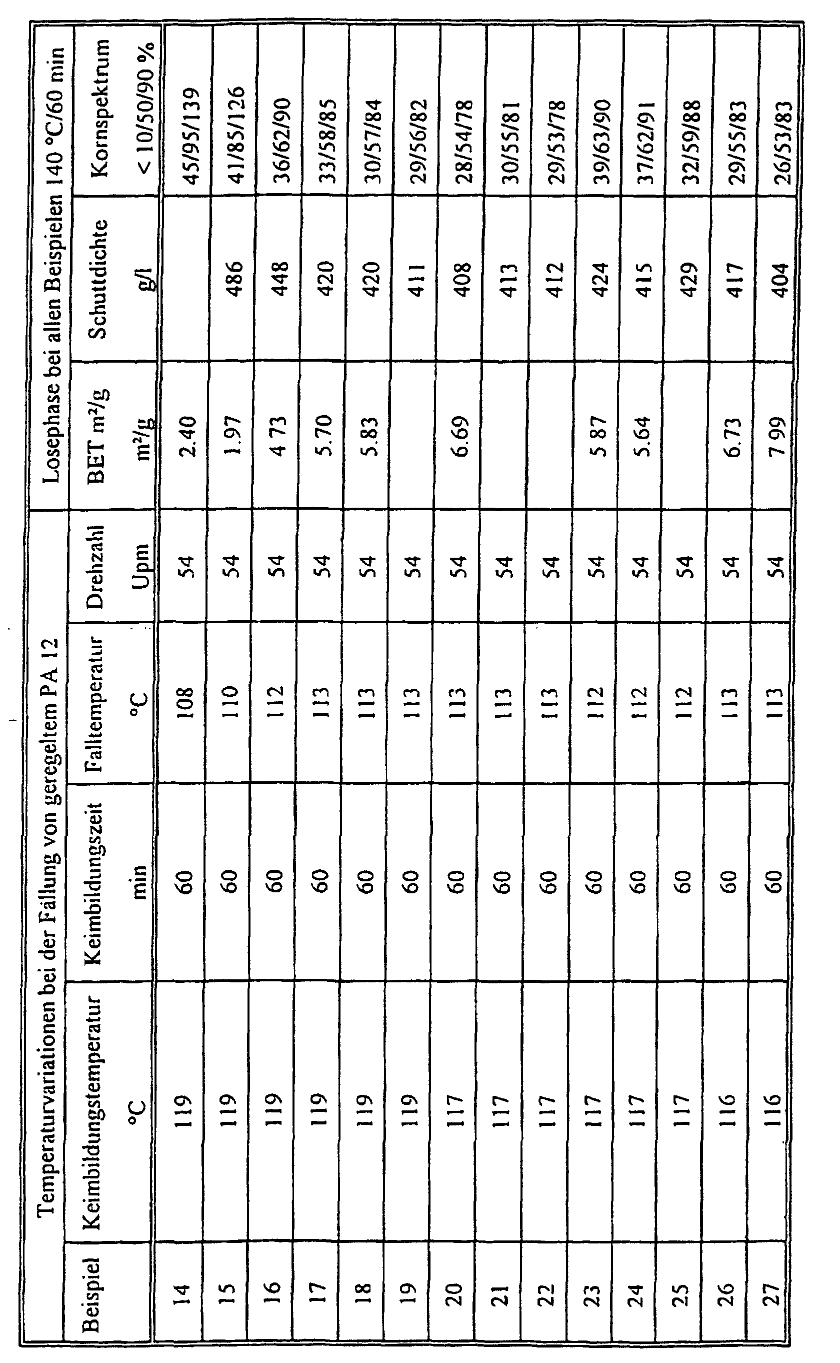

## Patentansprüche

1. Verfahren zur Herstellung von Polyamid-Fällpulver mit enger Korngrößenverteilung und niedriger Porosität,
**dadurch gekennzeichnet,**
**daß** ein Polyamid aus Lactamen bzw. ω-Aminocarbonsäuren mit mindestens 10 C-Atomen bzw. Diaminen und Dicarbonsäuren mit jeweils mindestens 10 C-Atomen oder Copolyamide aus den genannten Monomeren umgefällt wird, indem man Polyamid in einem aliphatischen Alkohol mit 1-3 C-Atomen bei 130 bis 165 °C unter Druck löst, die Temperatur bis zu einer Keimbildung ohne auszufallen erniedrigt, wobei eine Keimbildungsstufe 2 bis 20°C über der Fälltemperatur gehalten wird und in der Keimbildungsphase die Temperatur während 10 minuten bis 2 stunden Konstant gehalten wird, anschließend die Temperatur in einer zweiten Stufe bis zur Übersättigung weiter emiedrigt und die Fällung isotherm bei 100 bis 130 °C durchführt und nach der Fällung die Suspension trocknet.

2. Verfahren nach Anspruch 1,
**dadurch gekennzeichnet,**
**daß** als Alkohol Ethanol verwendet, das Polyamid bei 130 bis 165 °C gelöst und die Fällung isotherm bei 100 bis 130 °C durchgeführt wird, wobei zuvor eine Keimbildungsstufe 2 bis 20 °C über der Fälltemperatur eingehalten wird.

3. Verfahren nach einem der vorherigen Ansprüche,
**dadurch gekennzeichnet,**
**daß** das Polyamid bei 135 bis 155 °C gelöst wird.

4. Verfahren nach einem der vorherigen Ansprüche,
**dadurch gekennzeichnet,**
**daß** die Keimbildungsphase 5 bis 15 °C über der Fälltemperatur gehalten wird.

5. Verfahren nach einem der vorherigen Ansprüche,
**dadurch gekennzeichnet,**
**daß** während der Keimbildungsphase die Temperatur während 30 bis 90 Minuten konstant gehalten wird.

6. Verfahren nach einem der vorherigen Ansprüche,
**dadurch gekennzeichnet,**
**daß** als Polyamid Polylaurinlactam eingesetzt wird.

7. Verfahren zur Herstellung eines Polyamid-Pulvers nach einem der vorherigen Ansprüche,
**dadurch gekennzeichnet,**
**daß** das erhaltene Pulver eine Kornobergrenze von 100 µm besitzt, mindestens 90 % Anteil unter 90 µm maximal 10 % unter 32 µm und eine Schüttdichte über 400 g/l bzw. eine BET-Oberfläche unter 10 m²/g besitzt.

8. Verwendung eines Polyamid-Pulvers nach einem der vorherigen Ansprüche als Zusatz zu Coil-Coating Lacken.

9. Verwendung eines Polyamid-Pulvers nach einem der vorherigen Ansprüche zur Metallbeschichtung nach dem elektrostatischen Sprühverfahren.

10. Verwendung eines Polyamid-Pulvers nach einem der vorherigen Ansprüche zur Metallbeschichtung nach dem Wirbelsinterverfahren.

## Claims

1. A process for preparing precipitated polyamide powder of narrow particle size distribution and low porosity, **characterized in that** it comprises precipitating a polyamide formed from lactams or from ω-amino carboxylic acids having at least 10 °C atoms or from diamines and dicarboxylic acids each having at least 10 C atoms or copolyamides of these monomers by dissolving polyamide in an aliphatic alcohol having 1 to 3 C atoms under pressure at from 130 to 165°C, lowering the temperature until nucleation takes place without precipitation, a nucleation stage being held at from 2 to 20°C above the precipitation temperature and the temperature in the nucleation phase being held constant for from 10 minutes to 2 hours, then lowering the temperature further in a second step until supersaturation results and carrying out the precipitation isothermally at from 100 to 130°C, and, following precipitation, drying the suspension.

2. A process according to Claim 1, **characterized in that** ethanol is used as alcohol, the polyamide is dissolved at from 130 to 165°C and the precipitation is carried out isothermally at from 100 to 130°C preceded by a nucleation stage at from 2 to 20°C above the precipitation temperature.

3. A process according to either one of the preceding claims, **characterized in that** the polyamide is dissolved at from 135 to 155°C.

4. A process according to any one of the preceding claims, **characterized in that** the nucleation phase is held at from 5 to 15°C above the precipitation temperature.

5. A process according to any one of the preceding claims, **characterized in that** the temperature in the nucleation phase is held constant for from 30 to 90 minutes.

6. A process according to any one of the preceding claims, **characterized in that** polylaurolactam is employed as polyamide.

7. A process for preparing a polyamide powder, according to any one of the preceding claims, **characterized in that** the powder obtained has an upper particle size limit of 100 µm, a fraction of at least 90 % below 90 µm and not more than 10 % below 32 µm and a bulk density of more than 400 g/l and/or a BET surface area of less than 10 m²/g.

8. The use of a polyamide powder according to any one of the preceding claims as an additive to coil coating materials.

9. The use of a polyamide powder according to any one of the preceding claims for coating metal by the electrostatic spraying technique.

10. The use of a polyamide powder according to any one of the preceding claims for coating metal by the fluidized-bed sinter technique.

## Revendications

1. Procédé pour la fabrication de poudres précipitées en polyamide présentant une distribution granulométrique étroite et une faible porosité,
**caractérisé en ce que**
un polyamide composé de lactames ou d'acides ω-aminocarboniques avec au moins 10 atomes de carbone ou des diamines et des acides di-carboniques avec, à chaque fois, au moins 10 atomes de carbone ou des copolyamides obtenus à partir monomères cités est précipité, selon lequel le polyamide est dissous dans un alcool aliphatique présentant 1 à 3 atome(s) de carbone entre 130°C et 165°C sous pression, la température est réduite jusqu'à la germination sans chuter, l'étape germination est réalisée à une température supérieure de 2 à 20°C à la température de précipitation, et lors de la phase de germination, la température est maintenue de façon constante durant 10 minutes à 2 heures, puis la température est encore réduite dans une seconde étape jusqu'à la sursaturation et la précipitation est réalisée de façon isothermique entre 100 et 130°C et la suspension est séchée après la précipitation.

2. Procédé selon la revendication 1,
**caractérisé en ce que**
comme alcool on utilise de l'éthanol, le polyamide est dissous entre 130 et 165°C et la précipitation est réalisée de façon isothermique entre 100 et 130°C, une étape de germination étant au préalable réalisée à une température supérieure de 2 à 20°C à la température de précipitation.

3. Procédé selon l'une quelconque des revendications précédentes,
**caractérisé en ce que**
le polyamide est dissous entre 135 et 155°C.

4. Procédé selon l'une quelconque des revendications précédentes,
**caractérisé en ce que**
la phase germination est réalisée à une température supérieure de 5 à 15°C à la température de précipitation.

5. Procédé selon l'une quelconque des revendications précédentes,
**caractérisé en ce que**
la température est maintenue de façon constante durant 30 à 90 minutes durant la phase germination.

6. Procédé selon l'une quelconque des revendications précédentes,
**caractérisé en ce que**
comme polyamide on utilise du polylaurinelactame.

7. Procédé pour la fabrication d'une poudre en polyamide selon l'une quelconque des revendications précédentes,
**caractérisé en ce que**
la poudre obtenue présente une limite supérieur de taille de grain de 100 µm, avec au moins 90 % de la distribution en dessous de 90 µm, au maximum 10 % de la distribution en dessous de 32 µm, et une masse volumique apparente supérieure à 400 g/l ou une surface spécifique BET inférieure à 10 m²/g.

8. Utilisation d'une poudre en polyamide selon l'une quelconque des revendications précédentes, comme additif pour des peintures de prélaquage en continu (Coil-Coating).

9. Utilisation d'une poudre en polyamide selon l'une quelconque des revendications précédentes, pour le revêtement métallique selon un procédé de pulvérisation électrostatique.

10. Utilisation d'une poudre en polyamide d'après l'une quelconque des revendications précédentes, pour le revêtement métallique selon un procédé de frittage en lit fluidisé.
